# EUROPEAN PATENT SPECIFICATION

(11) **EP 1 055 675 B1**
(45) Date of publication and mention of the grant of the patent: **21.05.2003**
(21) Application number: 00304173.8
(22) Date of filing: 17.05.2000
(51) Int. Cl.: C07F 7/16

(54) **Method for making alkylhalosilanes**
Verfahren zur Herstellung von Alkylhalogensilanen
Procédé pour la préparation d'alkylhalosilanes

(30) Priority: 27.05.1999 US 136265 P; 30.06.1999 US 345540
(43) Date of publication of application: 29.11.2000
(73) Proprietor: GENERAL ELECTRIC COMPANY, Schenectady, NY 12345 (US)
(72) Inventor: Hanaoka, Hiroaki, Ohta-shi, Gunma-ken 373-0847 (JP); Koyama, Hiroaki, Ohta-shi, Gunma-ken 373-0011 (JP); Otani, Eiichi, Ohta-shi, Gumma-ken 373-0825 (JP); Lewis, Larry Neil, Scotia, New York 12302 (US); DeMoulpied, David Cheney, Athens, New York 12015 (US); Bablin, John Matthew, Amsterdam, New York 12010 (US)
(74) Representative: Szary, Anne Catherine, Dr.

(56) References cited:
- US-A- 4 602 101

## Description

The present invention relates to a method for making alkylhalosilanes. More particularly, the present invention relates to a process involving the reaction of a methyl chloride and powdered silicon in the presence of a catalyst and a copper-aluminum co-catalyst with or without added phosphorus. The catalyst generally comprises copper, zinc and tin.

Prior to the present invention, methylchlorosilanes, hereinafter sometimes designated "methylchlorosilane" for brevity, were made by effecting a reaction between powdered silicon, and methyl chloride in the presence of a copper-zinc-tin catalyst, as shown by U.S. Patent Number 4,500,724, Ward et al., assigned to the same assignee as the present invention. Silicon is typically combined with copper (Cu) in a range between about 0.5 weight % and about 10 weight %, zinc (Zn) in a range between about 0.01 weight % and about 1 weight %, and tin (Sn) in a range between about 10 parts per million and about 100 parts per million. Zinc used in the methylchlorosilane reaction can be added in the form of zinc dust or as brass which contains copper, zinc and tin. Zinc oxides also can be employed. Tin can be added in the form of tin dust, as the aforementioned brass, tin oxide or SnCl₄ injection.

US-A-4 602 101 discloses a method for controlling the process for the manufacture of alkylhalosilanes comprising contacting an alkyl halide with metallurgical grade silicon at 250-350°C in the presence of tin or tin compounds and copper or copper compounds and from 25 to 2500 ppm based on the silicon of a phosphorus promoter.

By means of the prior art, there is produced a mixture of alkylhalosilanes and in particular, methylchlorosilanes. As utilized hereinafter, the term "methylchlorosilanes" includes dimethyldichlorosilane (Di), which is the preferred methylchlorosilane, and a variety of other silanes such as tetramethylsilane, trimethylchlorosilane (Mono), methyltrichlorosilane (Tri), silicon tetrachloride, trichlorosilane, methyldichlorosilane (MH) and dimethylchlorosilane (M₂H).

In addition to the above methylchlorosilanes, residue is also formed during the production of methylchlorosilane crude. "Crude" as used herein refers to the unpurified product mixture of methylchlorosilanes. "Residue" as used herein refers to products in the methylchlorosilane crude that have a boiling point greater than 70°C at atmospheric pressure. Residue consists of such materials such as disilanes, for example, symmetrical 1,1,2,2,-tetrachlorodimethyldisilane, 1,1,2-trichlorotrimethyldisilane, disiloxanes, disilmethylenes, and other higher boiling species, for example, trisilanes, trisiloxanes, and trisilmethylenes.

Generally, it is desirable to yield high rates of production in the methylchlorosilane reaction as well as selectively produce dimethyldichlorosilane over the other products. New techniques are constantly being sought to improve the selectivity of the methylchlorosilane reaction as well as increase the yield of the methylchlorosilane products.

### SUMMARY OF THE INVENTION

The invention provides a method for making alkylhalosilanes. The method entails reacting an alkyl halide and powdered silicon in the presence of an effective amount of a catalyst and an effective amount of a co-catalyst comprising copper and aluminum. The catalyst generally comprises copper, zinc and tin.

### DETAIL DESCRIPTION

The present invention relates to a process involving the reaction of methyl chloride and powdered silicon in the presence of a catalyst and a copper-aluminum co-catalyst with or without added phosphorus. "Co-catalyst" as used herein refers to supplementary chemical compounds of copper and aluminum added to the methylchlorosilane reaction. The "catalyst" as used herein refers to the typically present copper-zinc-tin catalyst. In one embodiment, the co-catalyst does not have phosphorus, and in a further embodiment, the co-catalyst comprises phosphorus. When an effective amount of the copper-aluminum co-catalyst with or without added phosphorus is added to the methylchlorosilane reaction, the co-catalyst enhances the rate of dimethyldichlorosilane formation as well as reduces the weight ratio of methyltrichlorosilane to dimethyldichlorosilane. The addition of the copper-aluminum co-catalyst with or without phosphorus also maintains or reduces, with respect to the copper-zinc-tin catalyst, the percent by weight of the methylchlorosilane residue.

Unless otherwise noted, the term "effective amount," as used herein, includes that amount of a substance capable of either increasing the yield of the methylchlorosilane product or increasing selectivity toward dimethyldichlorosilane. Optimum amounts of a given reactant can vary based on reaction conditions and the identity of other constituents can be readily determined by one skilled in the art.

The methylchlorosilane reaction is typically run with silicon containing a catalyst along with a copper-aluminum co-catalyst with or without added phosphorus. The aluminum containing co-catalyst is added in an amount to provide to the entire reactor bed between 100 parts per million (ppm) and 1000 parts per million, and alternatively in a range between 300 parts per million and 700 parts per million. The copper for the co-catalyst is in a range between 0.5 weight % and 10 weight % relative to the entire reactor bed. When phosphorus is a component of the co-catalyst, it is typically present in a range between 100 parts per million and 1000 parts per million relative to the entire reactor bed. Silicon is also normally combined with zinc in a range between 0.01 weight % and 1 weight % relative to the entire reactor bed in addition to tin in a range between 10 parts per million and 100 parts per million relative to the entire reactor bed.

The copper compound used is typically from several different sources. These include copper metal (e.g., powder, flake), cuprous or cupric halides such as cupric chloride, cupric bromide, cuprous chloride, cuprous bromide and combinations thereof, copper oxides (including cuprous oxide, cupric oxide, and combinations thereof) or pre-prepared contact mass. The contact mass is prepared by reacting silicon and cuprous chloride at a temperature in a range between 280°C and 400°C in a furnace until evolution of silicon tetrachloride (SiCl₄) ceases. The resulting solid contains silicon and copper and is called contact mass. This contact mass is typically made prior to contact with methyl chloride to facilitate the generation of methylchlorosilanes.

The aluminum used in the copper-aluminum co-catalyst with or without added phosphorus is supplied from various sources. "Source" as used herein refers to the chemical compound which provides the necessary element or elements for the co-catalyst and catalyst. The source of aluminum, for instance, typically includes aluminum powder, various alloys including but not limited to copper-aluminum alloy, silver-aluminum alloy, silicon-aluminum alloy, magnesium-aluminum alloy and combinations thereof.

When phosphorus is added to the copper-aluminum co-catalyst, phosphorus is supplied from a variety of sources. For instance, the phosphorus source is typically copper phosphide, zinc phosphide, phosphorus trichloride, alkylphosphines, such as triethylphosphine or trimethylphosphine, or combinations thereof.

Although methyl chloride is preferably used in the practice of the present invention, other C(1-4) alkylchlorides, for example, ethylchloride, propylchloride, and the like, are also used.

Silicon used in the typical methylchlorosilane reactions has an iron (Fe) content in a range between 0.1 weight % and 1 weight % based on total amount of silicon, calcium (Ca) in a range between 0.01 weight % and 0.2 weight % based on total amount of silicon, and aluminum (Al) in a range between 0.02 weight % to 0.5 weight % based on total amount of silicon.

The silicon present in the reactor bed typically has a particle size below 700 microns, with an average size greater than 20 microns and less than 300 microns in size. The mean diameter of the silicon particles is preferably in the range between 100 microns and 150 microns.

The present invention, commonly, is practiced in a fixed bed reactor. The process of the present invention, however, can be utilized in other types of reactors, such as fluid bed and stirred bed. More specifically, the fixed bed reactor is a column which contains silicon particles through which the methylchloride gas is passed through. A stirred bed is similar to a fixed bed in which there is mechanical agitation of some sort in order to keep the bed in constant motion. A fluidized bed reactor, on the other hand, is a bed of silicon particles, catalyst particles and co-catalyst particles which is fluidized; that is the silicon particles are suspended in the gas, typically methylchloride, that is passed through the reactor. Reaction typically . occurs under semi-continuous conditions or in batch mode at a temperature in a range between 250°Celsius and 350°Celsius, and preferably in a range between 280°C and 320°C.

The expression "semi-continuous conditions" with respect to the description of the reaction of powdered silicon and methyl chloride in the presence of a catalyst and the copper-aluminum co-catalyst with or without added phosphorus means that the reaction is conducted in a fluid bed reactor under semi-continuous conditions. With a semi-continuous reaction, for example, the solids are added and the reactor is run until about 50% of the silicon has been utilized. After about 50% utilization, additional solids of silicon, catalyst, co-catalyst and promoters are added. A semi-continuous reaction is in contrast to a batch mode reaction. With a batch mode reaction, for instance, all of the solid components are combined and reacted with any liquid or gas products until most of the solids are consumed. In order to proceed the reaction has to be stopped and additional solid added. A fixed bed and stirred bed are both run under batch conditions.

Those skilled in the art are interested in the T/D weight ratio of the methylchlorosilane crude. The T/D ratio is the ratio of the methyltrichlorosilane (T or Tri) to dimethyldichlorosilane (D or Di) in the crude methylchlorosilane reaction product. Accordingly, an increase in the T/D ratio indicates that there is a decrease in the production of the preferred dimethyldichlorosilane. The T/D ratio increases with the addition of the copper-aluminum catalyst with or without added phosphorus.

In addition to T/D ratio, another measure of performance of the methylchlorosilane reaction is the rate of crude methylchlorosilane formation. The reaction rate constant for methylchlorosilane formation is usually defined by those skilled in the art with the term "Kₚ". Kₚ is the rate of methylchlorosilane production and is measured as grams of crude silane per grams of silicon per hour. The co-catalyst in the present invention enhances the rate of methylchlorosilane formation.

Finally, the percent of methyldichlorosilane (%MH) decreases with the addition of the copper-aluminum co-catalyst with or without added phosphorus. The percent of methyldichlorosilane produced is also a measure of methylchlorosilane performance. The hydride in methyldichlorosilane likely derives from the cracking of the methyl chloride which is indicative of a poorly performing methylchlorosilane reaction. Thus, high methyldichlorosilane is linked to poor methylchlorosilane performance.

In order that those skilled in the art will be better able to practice the invention, the following examples are given by way of illustration and are not by way of limitation.

### Example 1

A fixed bed reactor is set up consisting of a 20 centimeter(cm) long by 1.3 cm diameter outside diameter (OD) glass tube with a glass frit located 6 cm from the end to support the bed. Since the silicon was not stirred and the methylchlorosilane reaction is highly exothermic, the diameter of the bed was limited by heat transfer considerations. The thermal conductivity of the silicon was assumed to be the same as sand, namely 0.2 BTU/ft-hr-F. The highest anticipated reaction rate was 1 gram of crude silane/gram of silicon-hour. For this rate, a temperature rise of about 10° Celsius along the center line of the reactor was calculated. Over this temperature range, no changes in crude composition were observed. The other reactor design consideration was pressure drop. To be practical and safe, a pressure drop of no more than approximately 34.47 kPa (5 pounds per square inch (psi)) was considered acceptable, and this limited the bed size to 6 grams.

The reactor was centered vertically in a 5 cm glass tube wrapped with Nichrome™ ribbon or coated with tin oxide. Two pairs of electrodes were fitted to the tin oxide or Nichrome to create two heated sections. One section was for the inlet to the system, and was used to preheat the methylchloride feed. The other section was for the reactor itself. The 5 cm heated glass tube was centered in a 6.4 cm glass tube used for insulation of the reactor and for safety.

The reactor was charged with silicon and metal promoters and purged under a flow of argon. The reactor was then heated to 310°C under a methylchloride flow. Crude product, methylchlorosilane crude, was collected manually and weighed to determine reaction rate and then analyzed by Gas Chromatography. Rate, % dimethyldichlorosilane (as a percent of total crude product), % methyldichlorosilane and T/D ratio are compared at the 20% silicon utilization point.

### Example 2

Two different silicons typically are employed for this reaction. The components of the two types of silicons are given by weight and are as follows: Silicon I had 0.059 weight % aluminum based on total amount of silicon, 0.11 weight % calcium based on total amount of silicon and 0.36 weight % iron based on total amount of silicon while Silicon II had 0.16 weight % aluminum based on total amount of silicon, 0.02 weight % calcium based on total amount of silicon, and 0.47 weight % iron based on total amount of silicon.

This example is designed to show the relative performance of silicon I and II. A premix was prepared composed of silicon I (45 grams), copper flake (1.42 grams), and brass (1 gram; 80% copper, 19.5% zinc, 0.5% tin). An identical premix was made using silicon II. The reactor of example 1 was charged (6 grams) with a premix of silicon II and a rate of 0.7 grams of crude silane/grams of silicon-hour (g/g silicon-h) was obtained while the premix of silicon I gave a rate of 0.07 grams of crude silane/grams of silicon-hour.

### Example 3

This example shows the improvement of added copper-aluminum to silicon II. The premix of silicon II described in example 2 was combined with copper-aluminum alloy, Cu-Al, (60% copper; 6 milligrams) and the methlychlorosilane reaction was run as in example 2. The performance of the premix II with and without added copper-aluminum was compared. Addition of copper-aluminum to silicon II resulted in an improvement in rate without any loss of selectivity. Results are set forth in Table 1.

**Table 1**

| Cu-Al | Rate (g/g silicon-h) | %Di | %MH | T/D |
|---|---|---|---|---|
| 0 | 0.35 | 83.5 | 0.6 | 0.07 |
| 6 mg * | 0.5-0.7 | 83.5-84.2 | 0.6-0.7 | 0.06-0.075 |

| | | | | |
|---|---|---|---|---|
| * 2 runs | | | | |

### Example 4

This example show the improvement obtained using copper-aluminum (Cu-Al) and silicon I. A premix was prepared using silicon I (19 grams), copper (0.8 grams) and brass (0.2 grams). The premix was used in the methlychlorosilane reactor without copper-aluminum or with copper-aluminum as described in example 3. The results can be seen in the following table.

**Table 2**

| Cu-Al | rate (g/g silicon-h) | %Di | %MH | T/D |
|---|---|---|---|---|
| 0 | 0.07 | 70 | 13 | 0.17 |
| 6 mg* | 0.2-0.25 | 82-84 | 3-5 | 0.07-0.09 |

| | | | | |
|---|---|---|---|---|
| * 2 runs | | | | |

### Example 5

This example demonstrates the synergistic improvement of using both phosphorus, in the form of copper phosphide (Cu₃P) and copper-aluminum. The premix of example 4 was used in the methylchlorosilane reaction with either no additive, copper-aluminum as in example 3 or with 21 milligrams of copper phosphide. The results can be seen in Table 3 as follows.

**Table 3**

| Cu-Al | Cu₃P | rate (g/g silicon h) | %Di | %MH | T/D |
|---|---|---|---|---|---|
| 0 | 0 | 0.07 | 70 | 13 | 0.17 |
| 6 mg | 0 | 0.25 | 83 | 4 | 0.07 |
| 0 | 21 mg | 0.13 | 83 | 2 | 0.08 |
| 6 mg* | 21 mg | 0.3 | 90 | 2 | 0.05 |

| | | | | | |
|---|---|---|---|---|---|
| * 2 runs | | | | | |

### Example 6

This example compares the effect of added aluminum to added copper-aluminum which shows that on a per aluminum basis , the copper-aluminum alloy was a more effective promoter. The experiment described in example 5 was repeated except that in some cases, 3 milligrams of aluminum powder were added in place of the copper-aluminum alloy (Cu-Al is 60 weight % copper so adding 6 milligrams of copper-aluminum is the same amount of aluminum added as 3 milligrams aluminum powder). The results can be seen in Table 4.

**Table 4**

| Cu-Al or Al | Cu₃P | Rate (g/g silicon h) | %Di | %MH | T/D |
|---|---|---|---|---|---|
| 3 mg Al | 0 | only 10% Si utilization | 60 @ 10% utilization | 8 @ 10% utilization | 0.25 @ 10% utilization |
| 3 mg Al | 21 mg | 0.19 | 85 | 3 | 0.06 |
| 6 mg Cu-Al | 0 | 0.19 | 82 | 5.5 | 0.08 |
| 6 mg | 21 mg | 0.31 | 89 | 2 | 0.05 |

Analysis is typically performed by gas chromatography but other techniques such as infrared spectroscopy could be employed.

Silicon I gave an inferior rate and selectivity, when used in the methylchlorosilane reactor when compared to silicon II. It was found that the addition of 500 parts per million aluminum relative to the entire reactor bed in the form of copper-aluminum alloy to silicon I greatly improved the rate and selectivity of this silicon. It is evident from the results shown in Table 1 through 4 that the addition of a copper-aluminum co-catalyst has a dramatic effect in terms of rate and selectivity on the methylchlorosilane reaction. With the addition of the copper-aluminum co-catalyst, the reaction rate decreased (given in grams per grams of silicone per hour), the selectivity of % dimethyldichlorosilane increased and the ratio of methyltrichlorosilane to dimethyldichlorosilane (T/D) decreased. Furthermore, the addition of both phosphorus and aluminum improved rate and selectivity of silicon I used in the methylchlorosilane reaction more so than the addition of either aluminum or phosphorus alone.

In addition, zinc is a well-known promoter in the methylchlorosilane reaction. A low content of aluminum has been found to cause zinc retention which is an undesirable contaminant in the final product. However, this invention defines a specific amount of aluminum as a co-catalyst which solves the problem of zinc retention.

## Claims

1. A method for making alkylhalosilanes comprising reacting an alkyl halide and powdered silicon in the presence of an effective amount of a catalyst and an effective amount of a co-catalyst comprising copper and aluminum.

2. A method in accordance with claim 1, wherein the catalyst comprises copper, zinc and tin.

3. A method in accordance with claim 2, wherein the copper-zinc-tin catalyst comprises copper in a range between 0.5 weight % and 10 weight % relative to the entire reactor bed, zinc in a range between 0.01 weight % and 1 weight % relative to the entire reactor bed, and tin in a range between 10 parts per million and 100 parts per million relative to the entire reactor bed.

4. A method in accordance with any preceding claim, wherein the alkyl halide is methyl chloride.

5. A method in accordance with any preceding claim, wherein the reaction occurs in a reactor bed which comprises a reactor selected from the group consisting of a fixed bed reactor, a fluid bed reactor and a continuously stirred bed reactor.

6. A method in accordance with any preceding claim, wherein the reaction is operated in batch mode.

7. A method in accordance with any preceding claim, wherein the reaction is conducted at a temperature in the range between 250°C and 350°C.

8. A method in accordance with any preceding claim, wherein the copper-aluminum co-catalyst comprises copper in a range between 0.5% and 10% by weight relative to the entire reactor bed and aluminum in a range between 100 parts per million to 1000 parts per million relative to the entire reactor bed.

9. A method in accordance with any preceding claim, wherein the source of copper for the co-catalyst comprises (i) copper metal, (ii) a copper halide selected from the group consisting of cupric chloride, cupric bromide, cuprous chloride, cuprous bromide and combinations thereof, (iii) a copper oxide selected from the group consisting of cuprous oxide, cupric oxide and mixtures of copper, cuprous oxide, cupric oxide and combinations thereof or (iv) a contact mass of cuprous chloride and powdered silicon.

10. A method in accordance with claim 1, wherein the reaction further comprises an effective amount of phosphorus.

11. A method for making methylchlorosilanes comprising the step of reacting a methyl chloride and powdered silicon in the presence of an effective amount of a catalyst and an effective amount of a copper-aluminum co-catalyst and phosphorus wherein the copper-aluminum co-catalyst and phosphorus comprises copper in a range between 0.5% by weight and 10% by weight relative to silicon, aluminum in a range between 300 parts per million and 700 parts per million and phosphorus in a range between 100 parts per million and 1000 parts per million.

## Patentansprüche

1. Verfahren zum Herstellen von Alkylhalogensilanen, umfassend das Umsetzen eines Alkylhalogenids und pulverisierten Siliciums in Gegenwart einer wirksamen Menge eines Katalysators und einer wirksamen Menge eines Kupfer und Aluminium umfassenden Cokatalysators.

2. Verfahren nach Anspruch 1, worin der Katalysator Kupfer, Zink und Zinn umfasst.

3. Verfahren nach Anspruch 2, worin der Kupfer-Zink-Zinn-Katalysator Kupfer in einem Bereich zwischen 0,5 Gew.-% und 10 Gew.-% mit Bezug auf das gesamte Reaktorbett, Zink in einem Bereich zwischen 0,01 Gew.-% und 1 Gew.-%, bezogen auf das gesamte Reaktorbett, und Zinn in einem Bereich zwischen 10 ppm und 100 ppm, bezogen auf das gesamte Reaktorbett, umfasst.

4. Verfahren nach einem vorhergehenden Anspruch, worin das Alkylhalogenid Methylchlorid ist.

5. Verfahren nach einem vorhergehenden Anspruch, worin die Umsetzung in einem Reaktorbett stattfindet, das einen Reaktor umfasst, ausgewählt aus der Gruppe bestehend aus einem Festbett-Reaktor, einem Fluidbett-Reaktor und einem kontinuierlich gerührten Bettreaktor.

6. Verfahren nach einem vorhergehenden Anspruch, worin die Umsetzung ansatzweise ausgeführt wird.

7. Verfahren nach einem vorhergehenden Anspruch, worin die Umsetzung bei einer Temperatur im Bereich zwischen 250°C und 350°C ausgeführt wird.

8. Verfahren nach einem vorhergehenden Anspruch, worin der Kupfer-Aluminium-Cokatalysator Kupfer in einem Bereich zwischen 0,5 und 10 Gew.-% mit Bezug auf das gesamte Reaktorbett, und Aluminium in einem Bereich zwischen 100 ppm bis 1000 ppm mit Bezug auf das gesamte Reaktorbett umfasst.

9. Verfahren nach einem vorhergehenden Anspruch, worin die Quelle des Kupfers für den Cokatalysator (i) Kupfermetall, (ii) Kupferhalogenid, ausgewählt aus der Gruppe bestehend aus Kupfer(II)chlorid, Kupfer(II)bromid, Kupfer(I)chlorid, Kupfer(I)bromid und deren Kombinationen, (iii) einem Kupferoxid, ausgewählt aus der Gruppe bestehend aus Kupfer(I)oxid, Kupfer(II)oxid und Mischungen von Kupfer, Kupfer(I)oxid, Kupfer(II)oxid und deren Kombinationen oder (iv) einer Kontaktmasse von Kupfer(I)chlorid und pulverisiertes Silicium umfasst.

10. Verfahren nach Anspruch 1, worin die Umsetzung weiter eine wirksame Menge Phosphor umfasst.

11. Verfahren zum Herstellen von Methylchlorsilanen, umfassend die Stufe des Umsetzens eines Methylchlorids und pulverisierten Siliciums in Gegenwart einer wirksamen Menge eines Katalysators und einer wirksamen Menge eines Kupfer-Aluminium-Cokatalysators und Phosphor, worin der Kupfer-Aluminium-Cokatalysator und Phosphor Kupfer in einem Bereich zwischen 0,5 und 10 Gew.-% mit Bezug auf Silicium, Aluminium in einem Bereich zwischen 300 ppm und 700 ppm und Phosphor in einem Bereich zwischen 100 ppm und 1000 ppm umfasst.

## Revendications

1. Procédé pour préparer des alkylhalogénosilanes comprenant le fait de faire réagir un halogénure d'alkyle avec du silicium pulvérisé en présence d'une quantité efficace d'un catalyseur et d'une quantité efficace d'un co-catalyseur comprenant du cuivre et de l'aluminium.

2. Procédé selon la revendication 1, dans lequel le catalyseur comprend du cuivre, du zinc et de l'étain.

3. Procédé selon la revendication 2, dans lequel le catalyseur de cuivre-zinc-étain comprend du cuivre dans une proportion comprise dans l'intervalle de 0,5 % en poids à 10 % en poids, rapportée au lit de réacteur entier, du zinc en une proportion comprise dans intervalle de 0,01 % en poids à 1 % en poids, rapportée au lit de réacteur entier, et de l'étain en une proportion comprise dans un intervalle de 10 parties par million à 100 parties par million rapportée au lit de réacteur entier.

4. Procédé selon l'une quelconque des revendications précédentes, dans lequel l'halogénure d'alkyle est le chlorure de méthyle.

5. Procédé selon l'une quelconque des revendications précédentes, dans lequel la réaction a lieu dans un lit de réacteur qui comprend un réacteur choisi dans l'ensemble consistant en un réacteur à lit fixe, un réacteur à lit fluidisé et un réacteur à lit agité en continu.

6. Procédé selon l'une quelconque des revendications précédentes, dans lequel la réaction est mise en oeuvre en mode discontinu.

7. Procédé selon l'une quelconque des revendications précédentes, dans lequel la réaction est effectuée à une température comprise dans l'intervalle de 250 °C à 350 °C.

8. Procédé selon l'une quelconque des revendications précédentes, dans lequel le co-catalyseur de cuivre-aluminium comprend du cuivre en une proportion comprise dans un intervalle de 0,5 % à 10 % en poids, rapportée au lit de réacteur entier, et de l'aluminium en une proportion comprise dans intervalle de 100 parties par million à 1000 parties par million, rapportée au lit de réacteur entier.

9. Procédé selon l'une quelconque des revendications précédentes, dans lequel la source de cuivre pour le co-catalyseur comprend (i) du cuivre métal, (ii) un halogénure de cuivre choisi dans l'ensemble consistant en chlorure cuprique, bromure cuprique, chlorure cupreux, bromure cupreux et leurs combinaisons, (iii) un oxyde de cuivre choisi dans l'ensemble consistant en oxyde cupreux, oxyde cuprique et mélanges de cuivre, d'oxyde cupreux, d'oxyde cuprique et leurs combinaisons ou (iv) une masse de contact de chlorure cupreux et de silicium pulvérisé.

10. Procédé selon la revendication 1, dans lequel le mélange réactionnel comprend en outre une quantité efficace de phosphore.

11. Procédé pour préparer des méthylchlorosilanes comprenant l'étape consistant à faire réagir du chlorure de méthyle avec du silicium pulvérisé en présence d'une quantité efficace d'un catalyseur et d'une quantité efficace d'un co-catalyseur de cuivre-aluminium et de phosphore, dans lequel le catalyseur de cuivre-aluminium et le phosphore comprennent du cuivre en une proportion comprise dans l'intervalle de 0,5 % en poids à 10 % en poids, rapportée au silicium, de l'aluminium en une proportion comprise dans l'intervalle de 300 parties par million à 700 parties par million et du phosphore en une proportion comprise dans intervalle de 100 parties par million à 1000 parties par million.
